# EUROPEAN PATENT SPECIFICATION

(11) **EP 3 271 140 B1**
(45) Date of publication and mention of the grant of the patent: **17.02.2021**
(21) Application number: 15726931.7
(22) Date of filing: 29.05.2015
(51) Int. Cl.: B29C 64/153, B29C 64/165, B29C 64/393

(54) **3D PRINTINGSYSTEM AND METHOD**
3D-DRUCKSYSTEM UND VERFAHREN
SYSTÈME ET PROCÉDÉ D'IMPRESSION 3D

(43) Date of publication of application: 24.01.2018
(73) Proprietor: Hewlett-Packard Development Company, L.P., Spring TX 77389 (US)
(72) Inventor: SANZ ANANOS, Santiago, E-08174 Sant Cugat del Valles (ES); SANZ ANANOS, Isabel, E-08174 Sant Cugat del Valles (ES); CULUBRET, Sergi, E-08174 Sant Cugat del Valles (ES)
(74) Representative: Franks, Adam Peter
(86) International application number: PCT/EP2015/061947
(87) International publication number: WO 2016/192748

(56) References cited:
- EP-A2- 2 832 475
- WO-A1-2008/120183
- US-A1- 2002 145 213
- US-A1- 2015 061 170

## Description

### BACKGROUND

Additive manufacturing techniques, such as 3D printing, enable objects to be generated on a layer-by-layer basis. 3D printing techniques may generate a layer of an object by selectively solidifying a portion of a layer of a build material.

EP2832475 describes an additive layer manufacture machine comprising an energy source for selectively melting a layer of metal powder. US 2015/061170 A1 also discloses a 3D printing system comprising a build material distributor and a build material measurement module.

### BRIEF DESCRIPTION

Examples will now be described, by way of non-limiting example only, with reference to the accompanying drawings, in which:
Figure 1 is an illustration of a volume of build material in which a 3D object has been generated using a 3D printing system according to one example;
Figure 2 is a side-view illustration of a section of a layer of build material according to one example;
Figure 3 is a block diagram of a 3D printing system controller according to one example;
Figure 4 is a flow diagram outlining an method of controlling a 3D printing system according to one example;
Figures 5A to 5D are illustrations of where height measurements may be taken according to one example; and
Figures 6A to 6D are illustrations of height measurements according to one example.

### DETAILED DESCRIPTION

Some 3D printing techniques selectively solidify portions of a layer of build material using various techniques.

For example, some 3D printing systems selectively apply, for example using a printing mechanism, a coalescing agent on a layer of build material in a pattern corresponding to a layer of the object being generated. By applying energy to the whole, or a substantial portion, of the layer of build material those portions of the build material on which coalescing agent is deposited absorb sufficient energy to cause the temperature of those portions to rise such that coalescence, and subsequent solidification, of the build material occurs. Those portions of the build material on which no coalescing agent is deposited do not absorb sufficient energy to cause coalescence, and hence do not solidify.

Other 3D printing systems may apply a binder agent to a layer of build material to cause solidification of selective portions of build material. Yet other 3D printing systems may operate in a different manner.

The term 'build material', as used herein, refers to any material suitable for use by a 3D printer to generate 3D objects. The exact nature of the build material may be chosen based on criteria that may include, for example: the solidification mechanism used by the 3D printing technique used; and the properties of a generated 3D object.

The term 'build material' is generally used herein to refer to unsolidified build material.

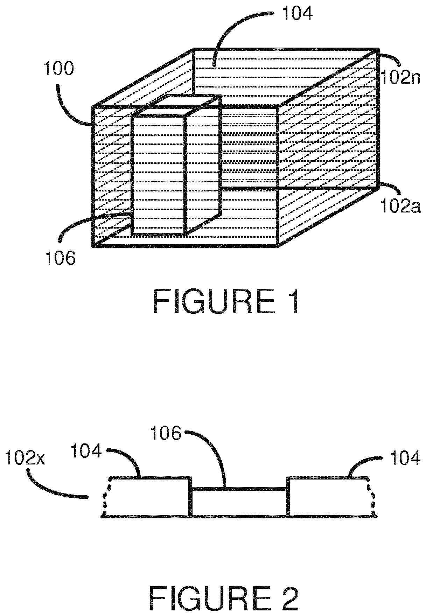

Figure 1 shows an illustration of the contents of a 3D printing system build module, hereinafter referred to as a build volume 100, after a 3D printing process has been performed by a 3D printing system (not shown). For clarity the build module itself is not shown, however the build module may be a suitable container in which a 3D printing system may generate a 3D object. For example, the build module may include side walls and a movable floor. A 3D printing system may form successive layers 102a to 102n of an unsolidified build material 104 on and above the movable floor and may selectively solidify portions thereof 106 to generate a 3D object, for example in the manner described above. The thickness of each layer of build material may vary depending on the type of 3D printing system used and configuration parameters, but may in some examples be in the region of about 50 to 200 µm.

In some examples build material may be in the form of a dry powder. In other examples the build material may be in the form of a paste, a gel, a slurry, or the like.

According to one example a suitable build material may be a powdered semi-crystalline thermoplastic material. One suitable material may be Nylon 12, which is available, for example, from Sigma-Aldrich Co. LLC. Another suitable material may be PA 2200 which is available from Electro Optical Systems EOS GmbH.

In other examples other suitable build material may be used. Such materials may include, for example, powdered metal materials, powdered plastics materials, powdered composite materials, powder ceramic materials, powdered glass materials, powdered resin material, powdered polymer materials, and the like.

Some kinds of build materials, some as powder-based build materials, contract when they are solidified, as illustrated in Figure 2. For example, when a portion of a powdered build material on which a coalescing agent has been exposed to sufficient energy the build material particles coalesce, the portion of build material becomes denser and occupies less space. In one example, a formed layer of unsolidified build material may have a thickness of about 100 microns, although in other examples a formed layer of unsolidified build material have a greater or lesser thickness.

Figure 2 shows a side view illustration through a portion of a layer 102x of the build volume 104 of Figure 1. The layer 102x comprises a portion 104 of lower density unsolidified build material, and a portion of higher density solidified build material 106. It can be clearly seen that the portion of solidified build material 106 has contracted compared to the portion of unsolidified build material 104. In Figure 2 it can be seen that contraction occurs vertically, but contraction may also occur horizontally.

The degree of contraction may be influenced by multiple factors that may include, for example: the quantity of coalescing agent on a portion of build material; the spatial distribution, or density, of coalescing agent on a portion of build material; the temperature reached by build material on which coalescing agent has been deposited; the temperature uniformity on a portion of build material; and the degree of packing (and hence the proportion of air) of a formed layer of build material. The process of generating a 3D object using a 3D printing system may also affect the degree of contraction over time. For instance, as temperature within the 3D printer changes this may affect the size of drops of coalescing agent deposited on a layer of build material. This may in turn affect the amount of energy absorbed thereby, and hence may affect the degree of contraction. Also, the amount of energy emitted by an energy source may vary over time, which may also affect the degree of contraction.

To ensure the quality of objects generated by 3D printing systems, such as the 3D printing systems described above, it is useful to ensure that the degree of contraction of solidified portions of layers of build material is carefully controlled whilst a 3D object is generated by a 3D printing system. For example, it may be beneficial to maintain a substantially constant degree of contraction whilst a 3D object is generated. By substantially is meant within acceptable an acceptable range, as described in more detail below. The acceptable degree of contraction may vary depending on the 3D printing system and the build material used. In one example, an acceptable degree of contraction may be between about 40% and 60% of unsolidified build material. In one example the degree of contraction may be around 50%. In other examples, however, a higher or lower degree of contraction may be acceptable.

In another example, it may be beneficial to be able to vary the degree of contraction of different layers of build material, whilst a 3D object is generated. For example this may enable the degree of contraction in some layers to be controlled within a first acceptable range, and may enable the degree of contraction in other layers to be within a second acceptable range. For example, this may enable some layers to have different properties, such as different mechanical properties, from other layers.

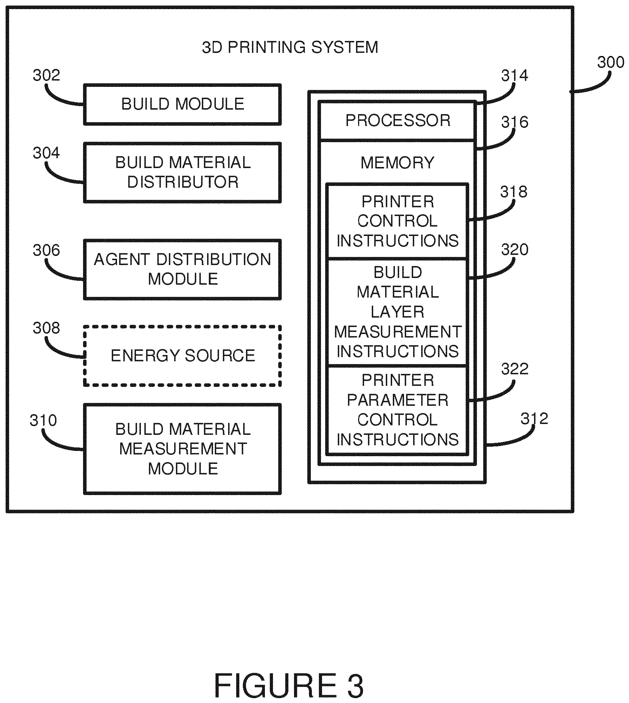

Referring now to Figure 3, there is shown a schematic diagram of a 3D printing system 300 according to one example. It will be appreciated that, for ease of explanation, not all elements of a complete 3D printing system are shown.

The 3D printing system 300 comprises a build module 302 in which a 3D object may be generated. In some examples the build module 302 may be removable from the 3D printing system 300, for example to enable the build module 302 to be removed from the 3D printing system 300 and be transported to an external processing unit (not shown). An external processing unit may, for example, be used to separate a generated 3D object from unsolidified build material, and may, in some examples, prepare a mix of fresh build material and unsolidified build material used in a previous 3D printing process to generate a build material mix suitable for use in subsequent 3D printing processes.

The system 300 also comprises a build material distributor 304 to enable a layer of build material to be formed within the build module 302. The build material distributor 304 may comprise, for example, a wiper or a roller mechanism to form a substantially uniform layer of build material using build material from a build material supply (not shown).

The system 300 also comprises an agent distribution module 306 to distribute one or multiple agents onto a formed layer of build material. The agent distribution module 306 may, for example, comprise one or multiple printheads, such as thermal inkjet or piezo printheads, to print one or multiple kinds of agents. In one example the agents are in fluid form.

In one example the agent distribution module 306 comprises an array of printhead nozzles that span, or substantially span, the width of the build module 302, in a page-wide array configuration. In another example the agent distribution module 306 may comprise one or multiple printheads on a movable carriage that may scan across the width of the build module 302. In one example the agent distribution module 306 may be controllable to selectively distribute at least a coalescing agent, or fusing agent, onto a formed layer of build material. In another example the agent distribution module 306 may be controllable to selectively distribute, in addition to a coalescing agent, other agents that may be used in the generation of a 3D object, such as a coalescence modifier agent, colouring agents, gloss agents, and so on.

In one example, the system 300 also comprises an energy source 308 to apply energy to formed layers of build material, such that portions of those layers on which coalescing agent has been deposited may coalesce and solidify. In one example the energy source 300 may apply energy to the whole, or substantially the whole, surface of formed layers of build material. In one example, the energy source 300 is a fixed energy source, for example positioned above the build module, to apply a determined level of energy to formed layers of build material. In another example, the energy source 300 may be a movable energy source, for example installed on a moveable carriage, that is movable over the surface of formed layers of build material to apply energy thereto. In a further example the energy source 300 may comprise a fixed and a movable energy source. In other examples the energy source 308 may not be present.

The system 300 also comprises a build material measurement module 310 to determine a degree of contraction of a portion of solidified build material. In one example the build material measurement module 310 may comprise one or multiple height sensors that are suitable for accurately determining small height differences between a portion of unsolidified build material and a portion of solidified build material. For example, such a height sensor may need to accurately measure differences in the order of a few hundred microns, with an accuracy of a few microns. In this way, the degree of vertical contraction of a solidified portion of a build material may be determined.

In one example, a height sensor used in the build material measurement module 310 may be an optical sensor based on commonly available, and relatively cheap, CD or DVD pickups. Such height sensors are generally well known and are suitable for accurately measuring small differences in height. In other examples, other kinds of sensors, such as laser sensors, may be used.

The system 300 further comprises a 3D printing system controller 312 to control the operation of the 3D printing system 300. The controller 312 comprises a processor 314 coupled to a memory 316. The memory 316 stores printer control computer readable instructions 318 that, when executed by the processor 312, control the general operation of the 3D printing system 300 as described herein. The memory 316 further stores build material layer measurement instructions 320 that, when executed by the processor 312, control elements of the 3D printing system to determine a degree of contraction of solidified portions of a layer of build material in accordance with examples described herein. The memory 316 further stores printer parameter control instructions 322 that, when executed by the processor 312, modify parameters of the 3D printing system to enable the degree of contraction of solidified build material to controlled, in accordance with examples described herein.

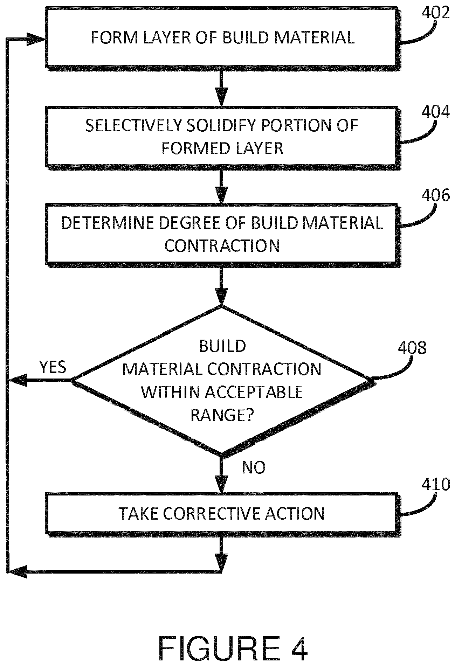

Operation of the 3D printing system 300, according to one example, will now be described with additional reference to the flow diagram of Figure 4.

At 402, the controller 312 controls the 3D printing system 300 to form a layer of build material, for example with the build material distributor 304.

At 404, the controller 312 controls the 3D printing system 300 to selectively solidify portions of the formed layer of build material, as previously described. For example, the selected portions may be solidified in accordance with 3D printing data representing a model of one or multiple 3D objects to be generated within the build volume 100. The 3D printing data may, for example, define which portions of layers of build material are to be solidified, for example, in accordance with slices of a 3D object model.

At 406, the controller 312 controls the 3D printing system 300 to determine the degree of contraction of a portion of build material that was solidified at 404, as described below in greater detail.

At 408, the controller 312 determines whether the determined degree of contraction is within an acceptable range or limits. If the controller 312 determines that the degree of contraction is within an acceptable range it controls the 3D printing system 300 to continue forming and selectively solidifying portions of formed layers of build material to form a 3D object. If, however, the controller 312 determines that the degree of contraction is not within an acceptable range the controller 312 takes, at block 410, an appropriate corrective action such as modifying one or multiple operating parameters of the printing system, as described in greater detail below. In one example an acceptable range may be within about +/- 10% of a reference contraction level. In other examples a higher or lower range may be acceptable. The corrective action aims to ensure that portions of solidified build material in subsequently processed layers of build material have a degree of contraction with an acceptable range.

In one example, if at 408 it is determined that the degree of build material contraction is above or below a predetermined threshold an alert may be issued or the 3D printing build process may be stopped or interrupted to indicate, since such a condition may be indicative of a quality issue with the object being generated. The predetermined threshold may be above the acceptable range of contraction.

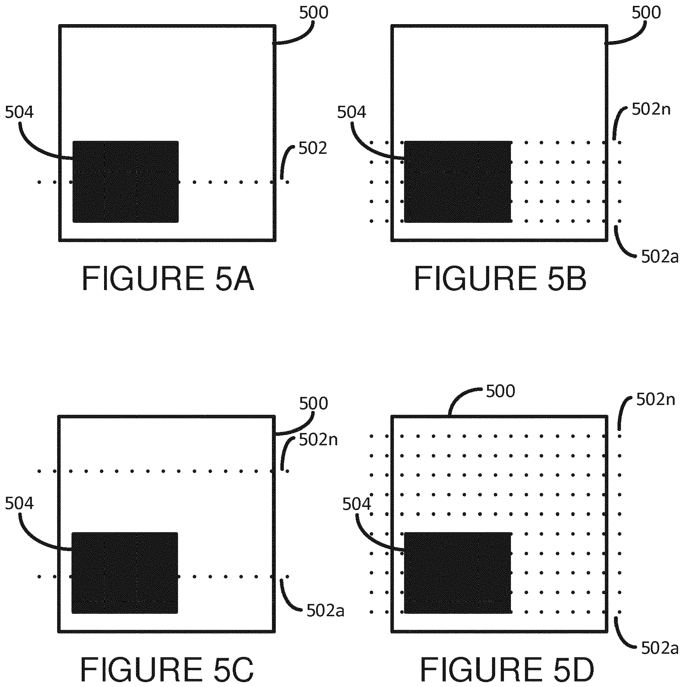

Referring now to Figure 5, there is shown a series of examples of how the controller 312 controls the build material measurement module 310 to measure the height of a portion of build material that includes a portion of build material that was solidified.

In one example, as shown in Figure 5A, the measurement module 310 can be controlled to take multiple height measurements along a single line 502 that transects a portion of a layer of build material 500 that includes a portion 504 of solidified build material. The spatial interval between separate height measurements may any suitable distance. In one example the spatial interval may be between about 0.5 cm and 5 cm, although in other examples other spatial intervals may be used.

In another example, as shown in Figure 5B, the measurement module 310 can be controlled to take multiple height measurements along a multiple lines 502a to 502n that each transect a portion of a layer of build material 500 that includes a portion 504 of solidified build material.

The taking of multiple height measurements along a single line, or along multiple lines, enables an average height measurement to be determined.

In another example, as shown in Figure 5C, the measurement module 310 can be controlled to take multiple height measurements along a first line 502a that transects a portion of a layer of build material 500 that includes a portion 504 of solidified build material, and to take multiple height measurements along a second line 502b that transects a portion a layer of build material 500 that does not include any solidified build material.

In another example, as shown in Figure 5D, the measurement module 310 is controlled to take multiple height measurements along a multiple lines 502a to 502n, some of which transect a portion of a layer of build material 500 that includes a portion 504 of solidified build material, and some of which that do not include a portion of solidified build material.

In one example, the measurement module 310 may comprise a single height sensor that may be positioned on a movable carriage, so that it may be positioned and moved relative to a layer of build material to enable height measurements to be taken from an appropriate portion of a layer of build material. In another example, the measurement module 310 may comprise multiple height sensors, for example spaced apart from one another, to enable height measurements to be taken from suitable portions of a layer of build material. In another example the measurement module 310 may be attached to the carriage on which the agent distributors are installed.

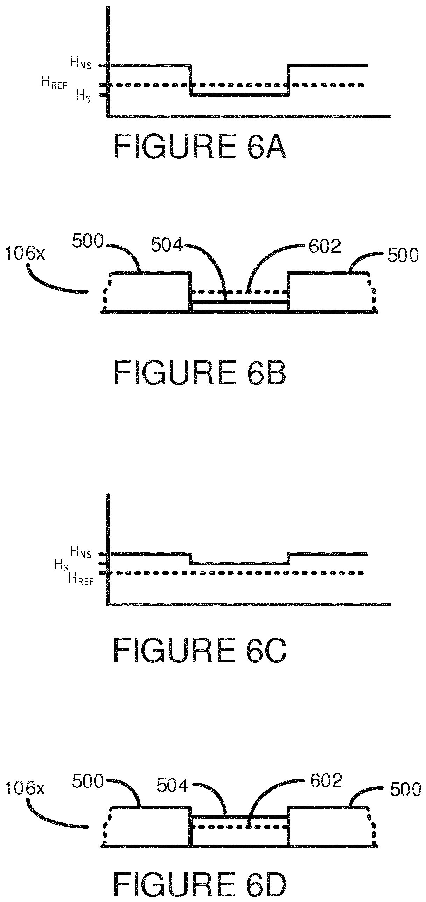

The taking of height measurements from both a portion of solidified build material and a portion of non-solidified build material enables the degree of contraction of a portion of solidified build material to be compared with the height of a portion of non-solidified build material, as illustrated in Figures 6A to 6D.

Figure 6A shows a height profile obtained from multiple spaced measurements made by the measurement module 310 for a portion of a layer of build material that comprises non-solidified and solidified build material. As can be seen, the height H_{NS} represents the measured height of non-solidified build material 500 (shown in Figure 6B), and height Hs represents the measured height of solidified build material (shown in Figure 6B). A reference height H_{REF}, that represents an expected level of contracted, is also shown.

It can be seen in Figure 6A that the portion of solidified build material 504 has contracted by more than the reference height H_{REF}. Contraction beyond the reference level H_{REF} may be indicative of too much energy having being absorbed by build material on which a coalescing agent has been deposited. This may be a result, for example, of a higher amount energy having being applied, of energy having been applied for too long a period of time, or by excess coalescing agent having been deposited. Other causes may include problems with the build material, such as insufficient build material packing density.

In Figures 6C and 6D it can be seen that the portion of solidified build material 504 has contracted by less the reference height H_{REF}. Contraction less than the reference height H_{REF} may be indicative of too little energy having been absorbed by build material on which a coalescing agent has been deposited. This may be a result, for example, of a lower amount of energy having been applied, of energy having been applied for a too short a period of time, or by insufficient coalescing agent having been deposited. Other causes may include problems with the build material, such as excessive build material packing density.

Accordingly, if the controller 312 determines that contraction beyond the reference level has occurred, the printer parameter control instructions 322 may modify one or multiple operating parameters of the 3d printing system to reduce the degree of contraction of portions of future layers of build material to be processed.

In one example, the controller 312 decreases the amount of energy emitted by the energy source 308. The amount of energy decrease may, for example, be based on a lookup table or may be derived iteratively by adjusting the amount of energy applied to different layers of build material and determining which energy level causes the reference level of contraction.

In one example, the controller 312 decreases the length of time that energy is emitted by the energy source 308. Again, the length of time decrease may, for example, be based on a lookup table or may be derived iteratively by adjusting the amount of energy applied to different layers of build material and determining which energy level causes the reference level of contraction.

In one example, the controller 300 may reduce the quantity of coalescing, or fusing, agent applied to a portion of build material to be solidified. For example, this may be achieved by modifying data used to control the agent distribution module 306, or adding an offset, to reduce the quantity, or the density, of coalescing agent deposited. The decrease in quantity or density may be based on a lookup table or may be derived iteratively by adjusting the quantity, or density, of agent applied to different layers of build material and determining which quantity, or density, causes the reference level of contraction.

Similarly, if the controller 300 determines that contraction less than the reference level has occurred, the printer parameter control instructions 322 may modify one or multiple operating parameters of the 3d printing system to increase the degree of contraction of portions of future layers of build material to be processed.

In one example, the controller 300 increases the amount of energy emitted by the energy source 308. The amount of energy increase may, for example, be based on a lookup table or may be derived iteratively by adjusting the amount of energy applied to different layers of build material and determining which energy level causes the reference level of contraction.

In one example, the controller 300 increases the length of time that energy is emitted by the energy source 308. Again, the length of time increase may, for example, be based on a lookup table or may be derived iteratively by adjusting the amount of energy applied to different layers of build material and determining which energy level causes the reference level of contraction.

In one example, the controller 300 may increase the quantity of coalescing, or fusing, agent applied to a portion of build material to be solidified. For example, this may be achieved by modifying data used to control the agent distribution module 306, or adding an offset, to increase the quantity, or the density, of coalescing agent deposited. The increase in quantity of density may be based on a lookup table or may be derived iteratively by adjusting the quantity, or density, of agent applied to different layers of build material and determining which quantity, or density, causes the reference level of contraction.

In one example, the controller 300 may adjust multiple printer operating parameters, for example, by modifying both the amount of energy applied whilst at the same time modifying the quantity, or density, of coalescing agent deposited.

In this way the controller 312 helps ensure that a desired degree of contraction occurs for each layer of build material that comprises solidified build material. This is turn helps produce high quality 3D objects from such 3D printing systems.

It will be appreciated that example described herein can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are examples of machine-readable storage that are suitable for storing a program or programs that, when executed, implement examples described herein. Accordingly, some examples provide a program comprising code for implementing a system or method as claimed in any preceding claim and a machine readable storage storing such a program.

## Claims

1. A 3D printing system comprising:
a build material distributor (304) to form a layer of build material within a build module;
an agent distribution module (306) to distribute one or multiple agents onto a formed layer of build material;
a build material measurement module (310) comprising a height sensor to obtain height measurements from both a solidified portion and an unsolidified portion of a formed layer of build material and to determine therefrom a level of vertical contraction of a solidified portion of the layer of build material; and
a controller (312) configured to:
determine if the determined level of contraction is within an acceptable range; and
to modify one or multiple operating parameters of the printing system such that solidified portions of a subsequently processed layer of build material have a level of contraction within an acceptable range.

2. The 3D printing system of claim 1, comprising an energy source (308) to apply energy to portions of a layer of build material, and wherein the controller (312) is to modify the amount of energy received by a portion of build material on which a coalescing agent has been deposited such that solidified portions of a subsequently processed layer of build material have a level of contraction within an acceptable range.

3. The 3D printing system of claim 2, wherein the controller (312) is to control the energy source to either: increase the length of time the energy source emits energy; or to increase the amount of energy emitted by the energy source.

4. The 3D printing system of claim 1, wherein the agent distribution module (306) is to deposit a coalescing agent on portions of a formed layer of build material, and wherein the controller is to modify the amount of coalescing agent deposited such that solidified portions of a subsequently processed layer of build material have a level of contraction within an acceptable range.

5. The 3D printing system of claim 1, wherein the build material measurement module (310) comprises multiple height sensors and wherein the controller is to control the height sensors to take multiple height measurements from different portions of a formed layer of build material to enable the controller to determine the degree of contraction of a solidified portion of a layer of build material.

6. The 3D printing system of claim 1, wherein the controller (312) is to control the 3D printing system such that the acceptable range of contraction of a solidified portion of build material is between about 40% and 60% that of unsolidified build material.

7. The 3D printing system of claim 1, wherein the controller (312) is to determine for a first layer of build material if the determined level of contraction is within a first acceptable range, is to determine for a second layer of build material if the determined level of contraction is within a second acceptable range.

8. A method of operating a 3D printer comprising:
forming (402) a layer of a build material;
selectively solidifying (404) a portion of the formed layer of build material;
determining (406) a degree of vertical contraction of the solidified portion of build material by obtaining height measurements from both a solidified portion and an unsolidified portion of a formed layer of build material;
comparing (408) the determined degree of contraction with a reference range; and
modifying (410), if the determined degree of contraction is outside of the reference range, an operating parameter of the 3D printer such that solidified portions of subsequent layers of build material have a degree of contraction within the reference range.

9. The method of claim 8, wherein modifying an operating parameter of the 3D printer comprises modifying the density of a coalescing agent deposited on the layer of build material.

10. The method of claim 8, wherein modifying an operating parameter of the 3D printer comprises modifying the amount of energy emitted by an energy source onto the formed layer of build material.

11. The method of claim 8, wherein modifying an operating parameter of the 3D printer comprises modifying the length of time an energy source emits energy onto the formed layer of build material.

12. The method of claim 8, further comprising issuing an alert or interrupting the operation of the 3D printer if it is determined that the degree of contraction is outside predefined limits.

## Patentansprüche

1. 3D-Drucksystem, das Folgendes umfasst:
einen Baumaterialverteiler (304), um eine Schicht von Baumaterial innerhalb eines Baumoduls auszubilden;
ein Mittelverteilungsmodul (306), um ein oder mehrere Mittel auf einer ausgebildeten Schicht von Baumaterial zu verteilen;
ein Baumaterialmessmodul (310), das einen Höhensensor umfasst, um Höhenmessungen von sowohl einem verfestigten Anteil als auch einem nicht verfestigten Anteil einer ausgebildeten Schicht von Baumaterial zu erhalten und daraus einen Grad einer vertikalen Kontraktion eines verfestigten Anteils der Schicht von Baumaterial zu bestimmen; und
eine Steuervorrichtung (312), die zu Folgendem konfiguriert ist:
Bestimmen, ob der bestimmte Kontraktionsgrad innerhalb eines akzeptablen Bereichs liegt; und
Modifizieren eines oder mehrerer Betriebsparameter des Drucksystems derart, dass verfestigte Anteile einer anschließend verarbeiteten Schicht von Baumaterial einen Kontraktionsgrad innerhalb eines akzeptablen Bereichs aufweisen.

2. 3D-Drucksystem nach Anspruch 1, das eine Energiequelle (308) umfasst, um Energie auf Anteile einer Schicht von Baumaterial anzuwenden, und wobei die Steuervorrichtung (312) die Energiemenge modifizieren soll, die durch einen Anteil des Baumaterials empfangen wird, auf dem ein Filmbildungshilfsmittel derart abgeschieden wurde, dass verfestigte Anteile einer anschließend verarbeiteten Schicht von Baumaterial einen Kontraktionsgrad innerhalb eines akzeptablen Bereichs aufweisen.

3. 3D-Drucksystem nach Anspruch 2, wobei die Steuervorrichtung (312) die Energiequelle steuern soll, um Folgendes zu bewirken, entweder:
Erhöhen der Zeitdauer, in der die Energiequelle Energie emittiert; oder
Erhöhen der durch die Energiequelle emittierten Energiemenge.

4. 3D-Drucksystem nach Anspruch 1, wobei das Mittelverteilungsmodul (306) ein Filmbildungshilfsmittel auf Anteilen einer ausgebildeten Schicht von Baumaterial abscheiden soll, und wobei die Steuervorrichtung die Menge an Filmbildungshilfsmittel modifizieren soll, die derart abgeschieden wurde, dass verfestigte Anteile einer anschließend verarbeiteten Schicht von Baumaterial einen Kontraktionsgrad innerhalb eines akzeptablen Bereichs aufweisen.

5. 3D-Drucksystem nach Anspruch 1, wobei das Baumaterialmessmodul (310) mehrere Höhensensoren umfasst und wobei die Steuervorrichtung die Höhensensoren steuern soll, um mehrere Höhenmessungen von verschiedenen Anteilen einer ausgebildeten Schicht von Baumaterial vorzunehmen, um der Steuervorrichtung zu ermöglichen, den Kontraktionsgrad eines verfestigten Anteils einer Schicht von Baumaterial zu bestimmen.

6. 3D-Drucksystem nach Anspruch 1, wobei die Steuervorrichtung (312) das 3D-Drucksystem derart steuern soll, dass der akzeptable Kontraktionsbereich eines verfestigten Anteils von Baumaterial zwischen etwa 40 % und 60 % eines nicht verfestigten Baumaterials liegt.

7. 3D-Drucksystem nach Anspruch 1, wobei die Steuervorrichtung (312) für eine erste Schicht von Baumaterial bestimmen soll, ob der bestimmte Kontraktionsgrad innerhalb eines ersten akzeptablen Bereichs liegt, für eine zweite Schichtvon Baumaterial bestimmen soll, ob der bestimmte Kontraktionsgrad innerhalb eines zweiten akzeptablen Bereichs liegt.

8. Verfahren zum Betreiben eines 3D-Druckers, das Folgendes umfasst:
Ausbilden (402) einer Schicht von Baumaterial;
selektives Verfestigen (404) eines Anteils der ausgebildeten Schicht von Baumaterial;
Bestimmen (406) eines Grades der vertikalen Kontraktion des verfestigten Anteils von Baumaterial durch Erhalten von Höhenmessungen von sowohl einem verfestigten Anteil als auch einem nicht verfestigten Anteil einer ausgebildeten Schicht von Baumaterial;
Vergleichen (408) des bestimmten Kontraktionsgrades mit einem Referenzbereich; und
Modifizieren (410), falls der bestimmte Kontraktionsgrad außerhalb des Referenzbereichs liegt, eines Betriebsparameters des 3D-Druckers derart, dass verfestigte Anteile nachfolgender Schichten von Baumaterial einen Kontraktionsgrad innerhalb des Referenzbereichs aufweisen.

9. Verfahren nach Anspruch 8, wobei das Modifizieren eines Betriebsparameters des 3D-Druckers das Modifizieren der Dichte eines auf der Schicht von Baumaterial abgeschiedenen Filmbildungshilfsmittels umfasst.

10. Verfahren nach Anspruch 8, wobei das Modifizieren eines Betriebsparameters des 3D-Druckers das Modifizieren der Energiemenge, die durch eine Energiequelle auf die ausgebildete Schicht von Baumaterial emittiert wird, umfasst.

11. Verfahren nach Anspruch 8, wobei das Modifizieren eines Betriebsparameters des 3D-Druckers das Modifizieren der Länge derZeit, für die eine Energiequelle Energie auf die ausgebildete Schicht von Baumaterial emittiert, umfasst.

12. Verfahren nach Anspruch 8, das ferner ein Ausgeben eines Alarms oder ein Unterbrechen des Betriebs des 3D-Druckers umfasst, falls bestimmt wird, dass der Kontraktionsgrad außerhalb vordefinierter Grenzen liegt.

## Revendications

1. Système d'impression 3D comprenant :
un distributeur de matériau de fabrication (304) servant à former une couche de matériau de fabrication à l'intérieur d'un module de fabrication ;
un module de distribution d'agent (306) servant àdistribuer un ou plusieurs agents sur une couche formée de matériau de fabrication ;
un module de mesure de matériau de fabrication (310) comprenant un capteur de hauteur servant à obtenir des mesures de hauteur à la fois d'une partie solidifiée et d'une partie non solidifiée d'une couche formée de matériau de fabrication et servant à déterminer à partir de celles-ci un niveau de contraction verticale d'une partie solidifiée de la couche de matériau de fabrication ; et
un régulateur (312) configuré pour :
déterminer si le niveau de contraction déterminé se situe dans une plage acceptable ; et
modifier un ou plusieurs paramètres de fonctionnement du système d'impression de telle sorte que des parties solidifiées d'une couche de matériau de fabrication traitée ultérieurement ont un niveau de contraction situé dans une plage acceptable.

2. Système d'impression 3D selon la revendication 1, comprenant une source d'énergie (308) servant à appliquer de l'énergie àdes parties d'une couche de matériau de fabrication, et le régulateur (312) devant modifier la quantité d'énergie reçue par une partie du matériau de fabrication sur laquelle un agent de coalescence a été déposé de telle sorte que les parties solidifiées d'une couche de matériau de fabrication traitée ultérieurement ont un niveau de contraction situé dans une plage acceptable.

3. Système d'impression 3D selon la revendication 2, le régulateur (312) devant réguler la source d'énergie soit pour : augmenter la durée pendant laquelle la source d'énergie émet de l'énergie ; soit pour augmenter la quantité d'énergie émise par la source d'énergie.

4. Système d'impression 3D selon la revendication 1, le module de distribution d'agent (306) devant déposer un agent de coalescence sur des parties d'une couche formée de matériau de fabrication, et le régulateur devant modifier la quantité d'agent de coalescence déposée de telle sorte que des parties solidifiées d'une couche de matériau de fabrication traitée ultérieurement ont un niveau de contraction situédans une plage acceptable.

5. Système d'impression 3D selon la revendication 1, le module de mesure de matériau de fabrication (310) comprenant plusieurs capteurs de hauteur et le régulateur devant réguler les capteurs de hauteur de telle sorte qu'ils prennent plusieurs mesures de hauteur à partir de différentes parties d'une couche formée de matériau de fabrication pour permettre au régulateur de déterminer le degré de contraction d'une partie solidifiée d'une couche de matériau de fabrication.

6. Système d'impression 3D selon la revendication 1, le régulateur (312) étant destiné à réguler le système d'impression 3D de telle sorte que la plage acceptable de contraction d'une partie solidifiée du matériau de fabrication est comprise entre environ 40 % et 60 % de celle du matériau de fabrication non solidifié.

7. Système d'impression 3D selon la revendication 1, le régulateur (312) devant déterminer pour une première couche de matériau de fabrication si le niveau déterminé de contraction se situe dans une première plage acceptable, devant déterminer pour une deuxième couche de matériau de fabrication si le niveau de contraction déterminé se situe dans une deuxième plage acceptable.

8. Procédé de fonctionnement d'une imprimante 3D comprenant :
la formation (402) d'une couche d'un matériau de fabrication ;
la solidification sélective (404) d'une partie de la couche formée de matériau de fabrication ;
la détermination (406) d'un degré de contraction verticale de la partie solidifiée du matériau de fabrication en obtenant des mesures de hauteur à la fois à partir d'une partie solidifiée et
d'une partie non solidifiée d'une couche formée de matériau de fabrication ;
la comparaison (408) du degré de contraction déterminé avec une plage de référence ; et
la modification (410), si le degré de contraction déterminé est en dehors de la plage de référence, d'un paramètre de fonctionnement de l'imprimante 3D de telle sorte que des parties solidifiées de couches suivantes de matériau de fabrication présentent un degré de contraction situé dans la plage de référence.

9. Procédé selon la revendication 8, la modification d'un paramètre de fonctionnement de l'imprimante 3D comprenant la modification de la densité d'un agent de coalescence déposé sur la couche de matériau de fabrication.

10. Procédé selon la revendication 8, la modification d'un paramètre de fonctionnement de l'imprimante 3D comprenant la modification de la quantité d'énergie émise par une source d'énergie sur lacouche formée de matériau de fabrication.

11. Procédé selon la revendication 8, la modification d'un paramètre de fonctionnement de l'imprimante 3D comprenant la modification de la durée pendant laquelle une source d'énergie émet de l'énergie sur la couche formée de matériau de fabrication.

12. Procédé selon la revendication 8, comprenant en outre la diffusion d'une alerte ou l'interruption du fonctionnement de l'imprimante 3D s'il est déterminé que le degré de contraction est en dehors de limites prédéfinies.
